# EUROPÄISCHE PATENTANMELDUNG

(11) **EP 2 567 831 A1**
(43) Veröffentlichungstag der Anmeldung: **13.03.2013**
(21) Anmeldenummer: 12183068.1
(22) Anmeldetag: 05.09.2012
(51) Int. Cl.: B60B 1/14, B60B 23/10

(54) **Radsystem für Nutzfahrzeuge**

(30) Priorität: 08.09.2011 DE 102011082319
(71) Anmelder: SAF-HOLLAND GmbH, 63856 Bessenbach (DE)
(72) Erfinder: Nehlsen, Uwe, 78345 Moos (DE); Schätzle, Petra, 78224 Singen (DE); Feltham, Alan, 78315 Radolfzell (DE); Koch, Svend, 78315 Radolfzell (DE)
(74) Vertreter: Müller Schupfner & Partner

(57) **Zusammenfassung**

Betrifft ein Radsystem für Nutzfahrzeuge umfassend eine Felgeneinheit (2) und eine Trägereinheit (4) wobei die Trägereinheit (4) zumindest einen ersten Tragbereich (44) aufweist, über welchen diese an der der Felgeneinheit (2) festlegbar ist, wobei ein Klemmmittel (6) vorgesehen ist, das formschlüssig an einer ersten Einheit festlegbar ist (2,4) und ausgelegt ist, kraftschlüssig an der zweiten Einheit (2,4) festgelegt zu werden, wobei ein Eingriffsmittel (8) vorgesehen, das ausgelegt ist, einen in einer Umfangsrichtung wirkenden Formschluss zwischen der zweiten Einheit (2,4) und dem Klemmmittel (6) und/oder der ersten Einheit (2,4) herzustellen, um die Felgeneinheit (2) gegen die Verdrehung um eine Rotationsachse (R) relativ zur Trägereinheit (4) zu sichern.

## Beschreibung

Die vorliegende Erfindung betrifft ein Radsystem für Nutzfahrzeuge. Derartige Radsysteme sind aus dem Stand der Technik insoweit bekannt, als dass eine Felgeneinheit, welche dazu dient, einen Reifen und einen Schlauch bzw. einen schlauchlosen Reifen aufzunehmen, und eine Trägereinheit kraftschlüssig aneinander festgelegt sind. Insbesondere bei einer Reifenpanne ist diese Anordnung bevorzugt, da die Felgeneinheit und die Trägereinheit voneinander getrennt montiert und demontiert werden können. Dabei tritt jedoch das Problem auf, dass die kraftschlüssige Verbindung zwischen Trägereinheit und Felgeneinheit die mitunter hohen auftretenden Bremskräfte nicht übertragen kann und es folglich zum Rutschvorgang zwischen Felgeneinheit und Trägereinheit kommen kann. Dabei kann sich der Bremsweg des Nutzfahrzeuges auf kritische Weise verlängern und es kann zu Schädigungen des Materials an den Kontaktstellen beider Bauteile kommen.

Aufgabe der vorliegenden Erfindung ist es folglich, ein Radsystem für Nutzfahrzeuge bereitzustellen, welches unter Beibehaltung des einfachen Montageprinzips des Radsystems die Übertragung höherer Bremskräfte als bisher ermöglicht.

Diese Aufgabe wird gelöst mit einem Radsystem für Nutzfahrzeuge gemäß dem unabhängigen Anspruch 1. Weitere Vorteile und Merkmale der Erfindung ergeben sich aus den abhängigen Ansprüchen.

Erfindungsgemäß ist ein Radsystem für Nutzfahrzeuge vorgesehen, das eine Felgeneinheit und eine Trägereinheit umfasst, wobei die Trägereinheit zumindest einen ersten Tragbereich aufweist, über welchen diese an der Felgeneinheit festlegbar ist, wobei ein Klemmmittel vorgesehen ist, das formschlüssig an einer ersten Einheit bzw. der Felgeneinheit oder der Trägereinheit festlegbar ist und ausgelegt ist, kraftschlüssig an der zweiten Einheit bzw. der anderen der Felgeneinheit oder der Trägereinheit festgelegt zu werden, wobei ein Eingriffsmittel vorgesehen ist, das ausgelegt ist, einen in einer Umfangsrichtung wirkenden Formschluss zwischen der zweiten Einheit und dem Klemmmittel und/oder der ersten Einheit herzustellen, um die Felgeneinheit gegen Verdrehung um eine Rotationsachse relativ zur Trägereinheit zu sichern. Bevorzugt ist die Felgeneinheit ringförmig ausgebildet und an ihrer Außenseite dazu geeignet, einen Reifen und einen Schlauch bzw. einen schlauchlosen Reifen aufzunehmen. Insbesondere kann es bevorzugt sein, dass die Felgeneinheit als ein rotationssymmetrisch um die Rotationsachse ausgetragener, U-förmiger Querschnitt ist, wobei besonders bevorzugt die offene Seite des U-förmigen Querschnitts nach außen weist, wobei ein Reifen bzw. ein Schlauch in die offene Seite des U-förmigen Querschnitts eingesetzt werden kann und sowohl gegen Verlagerung in radialer Richtung, also quer zur Rotationsachse, als auch in axialer Richtung, also längs der Rotationsachse, gesichert ist. Um die Felgeneinheit mit einer Radlagereinheit eines Nutzfahrzeuges zu verbinden, ist erfindungsgemäß eine Trägereinheit vorgesehen, wobei die Trägereinheit zumindest einen ersten Tragbereich aufweist, über welchen sie an der Felgeneinheit festlegbar ist. Bevorzugt ist es, dass die Trägereinheit eine Vielzahl von ersten Tragbereichen aufweist, insbesondere bevorzugt zumindest drei erste Tragbereiche. Weiterhin ist erfindungsgemäß ein Klemmmittel vorgesehen, welches entweder an der Felgeneinheit oder an der Trägereinheit formschlüssig festlegbar ist. Hierfür ist bevorzugt ein Befestigungsmittel vorgesehen, welches das Klemmmittel formschlüssig an einer der beiden Einheiten (d.h. der ersten Einheit) festlegt. Vorteilhafterweise wird eine Schraube oder ein Gewindebolzen verwendet. Weiterhin ist das Klemmmittel dafür ausgelegt, eine kraftschlüssige Verbindung mit der jeweils anderen Einheit (d.h. der zweiten Einheit) einzugehen, um die Trägereinheit und die Felgeneinheit kraftschlüssig miteinander zu verbinden. Ist das Klemmmittel an der Trägereinheit formschlüssig festgelegt, so geht es folglich eine kraftschlüssige Verbindung mit der Felgeneinheit ein. Ist das Klemmmittel dagegen mit der Felgeneinheit formschlüssig verbunden, so geht es eine kraftschlüssige Verbindung mit der Trägereinheit ein. Weiterhin ist es erfindungsgemäß vorgesehen, das zur Unterstützung des Kraftschlusses zwischen dem Klemmmittel und einer der Einheiten auch ein Formschluss zwischen der zweiten bzw. jeweils anderen Einheit und dem Klemmmittel oder der ersten Einheit bzw. zwischen der zweiten Einheit, dem Klemmmittel und der ersten Einheit vorgesehen ist. Es soll durch diesen Formschluss verhindert werden, dass durch hohe Umfangskräfte, die insbesondere bei einer starken Bremsung des Nutzfahrzeuges und entsprechend hohen Drehmomenten zwischen Felgeneinheit und Trägereinheit auftreten, die Umfangs- bzw. Tangentialkraft, die von dem Kraftschluss zwischen Klemmmittel und einer der beiden Einheiten gehalten werden kann, überschritten wird. Stattdessen wird bevorzugt ein Großteil der zwischen Felgeneinheit und Trägereinheit wirkenden Umfangskräfte durch die formschlüssige Verbindung aufgenommen. Es kann auf diese Weise insbesondere verhindert werden, dass sich die Felgeneinheit relativ zur Trägereinheit verdreht und ein unerwünschter Abrieb an den Kontaktstellen zwischen Felgeneinheit und Trägereinheit oder Felgeneinheit und Klemmmittel oder Trägereinheit und Klemmmittel auftritt.

In bevorzugter Weise ist ein zweites Eingriffsmittel als Rücksprung oder Aussparung ausgebildet und an der zweiten Einheit vorgesehen, um mit einem ersten Eingriffsmittel zumindest bereichsweise in formschlüssigen Eingriff gebracht zu werden. Als zweite Einheit wird bevorzugt eine der beiden Einheiten Trägereinheit oder Felgeneinheit bezeichnet, wobei an einer dieser beiden Einheiten ein zweites Eingriffsmittel, das als Rücksprung bzw. Aussparung ausgebildet ist, vorgesehen ist. Bevorzugt ist es, dass das zweite Eingriffsmittel eine Hinterschneidung bildet, um ein erstes Eingriffsmittel formschlüssig gegen Verlagerung in Umfangsrichtung bzw. in Tangentialrichtung um die Rotationsachse R zu sichern. Mit Vorteil ist das zweite Eingriffsmittel als Nut ausgeführt bzw. Langlochbohrung, in welche beispielsweise ein erstes Eingriffsmittel, welches als Passfeder oder Bolzen ausgeführt ist, eingreift und auf diese Weise formschlüssig am zweiten Eingriffsmittel festgelegt ist. Bevorzugt kann es sein, dass eine größere Anzahl zweiter Eingriffsmittel vorgesehen sind, als erste Eingriffsmittel vorhanden sind, so dass insbesondere, wenn die zweiten Eingriffsmittel an der Felgeneinheit vorgesehen sind, verschiedene Trägereinheiten mit jeweils verschiedenen Anzahlen erster Eingriffsmittel mit derselben Felgeneinheit verbunden werden können.

In einer weiteren bevorzugten Ausführungsform ist das erste Eingriffsmittel ein an der ersten Einheit oder dem Klemmmittel vorgesehener Vorsprung, der mit dem zumindest bereichsweise korrespondierenden zweiten Eingriffsmittel an der zweiten Einheit in formschlüssigen Eingriff bringbar ist. Wie zuvor ist die erste Einheit und die zweite Einheit jeweils eine der beiden Einheiten Trägereinheit oder Felgeneinheit, wobei die erste Einheit bevorzugt die Einheit ist, welche formschlüssig mit dem Klemmmittel verbunden ist. Das erste Eingriffsmittel ist bevorzugt ein Vorsprung an der ersten Einheit oder dem Klemmmittel und greift zumindest bereichsweise formschlüssig in ein zweites Eingriffsmittel, welches an der zweiten Einheit vorgesehen ist, ein. Auf diese Weise wird über das erste Eingriffsmittel entweder die erste Einheit direkt gegen Verlagerung relativ zur zweiten Einheit gesichert, oder über das Klemmmittel, welches seinerseits formschlüssig mit der ersten Einheit verbunden ist, gegen umfängliche bzw. tangentiale Verlagerung relativ zur zweiten Einheit gesichert. Bevorzugt ist das erste Eingriffsmittel als an dem Klemmmittel oder der ersten Einheit hervorragende Nase oder Noppe ausgebildet und greift zumindest bereichsweise formschlüssig in ein als entsprechender Rücksprung ausgebildetes zweites Eingriffsmittel an der zweiten Einheit ein.

Mit Vorteil weist das Klemmmittel eine Vielzahl von, vorzugsweise zwei als Vorsprung, bzw. Noppe, bzw. Nase ausgebildete erste Eingriffsmittel auf, welche mit als Rücksprung ausgebildeten zweiten Eingriffsmitteln an der Felgeneinheit in formschlüssigen Eingriff bringbar sind. Bevorzugt sind die zweiten Eingriffsmittel als Langlöcher ausgebildet. Um eine einfache Fertigung des Klemmmittels mit integrierten ersten Eingriffmitteln zu erreichen wird das Klemmmittel gemeinsam mit den ersten Eingriffsmitteln durch Gießen hergestellt. Alternativ ist es auch bevorzugt, die ersten Eingriffsmittel nachträglich an das Klemmteil anzugießen. Die ersten Eingriffsmittel weisen bevorzugt eine kugelförmige Außenfläche auf, welche mit dem jeweils gegenüberliegenden zweiten Eingriffsmittel in Kontakt gelangt und dabei Spannungsspitzen bei der Kraftübertragung zwischen dem ersten und dem korrespondierenden zweiten Eingriffsmittel minimiert.

Alternativ bevorzugt kann es sein, dass das erste Eingriffsmittel als separates Bauteil ausgelegt ist und mit zweiten Eingriffsmitteln der zweiten Einheit und der ersten Einheit oder mit zweiten Eingriffsmitteln der zweiten Einheit und dem Klemmmittel oder mit zweiten Eingriffsmitteln der zweiten Einheit sowie der ersten Einheit und dem Klemmmittel in formschlüssigen Eingriff zu gelangen. Es kann insbesondere bevorzugt sein, dass das erste Eingriffsmittel als separates Bauteil ausgelegt ist, beispielsweise als Bolzen oder Passfeder, wobei das erste Eingriffsmittel bevorzugt in zwei zweiten Eingriffsmitteln formschlüssig eingreift. Die zweiten Eingriffsmittel sind dabei jeweils an der zweiten Einheit und der ersten Einheit oder an der zweiten Einheit und dem Klemmmittel oder sowohl an der zweiten Einheit, der ersten Einheit als auch an dem Klemmmittel vorgesehen.

In insbesondere bevorzugter Ausführungsweise kann das erste Eingriffsmittel ein an einer der Einheiten oder dem Klemmmittel stoffschlüssig festgelegtes Bauteil sein. Insbesondere, um die Handhabung des ersten Eingriffsmittels zu erleichtern, besonders, um eine Vielzahl loser Teile bei der Montage des Radsystems zu vermeiden, kann das erste Eingriffsmittel stoffschlüssig an einer der Einheiten oder dem Klemmmittel festgelegt sein. Insbesondere eignet sich hierfür eine Löt- oder Schweißverbindung oder auch eine Klebeverbindung des ersten Eingriffsmittels, beispielsweise einer Passfeder, im zweiten Eingriffsmittel einer der Einheiten oder des Klemmmittels. Diese stoffschlüssige Verbindung kann vor der Montage des Radsystems hergestellt werden, oder während der Erstmontage des Radsystems, beispielsweise durch Einfügen eines Klebers oder Lotes, vorgesehen sein. Hierdurch kann besonders bevorzugt verhindert werden, dass das erste Eingriffsmittel, wenn es als separates Bauteil ausgelegt ist, während der Montage oder Demontage verloren geht.

In einer besonders bevorzugten Ausführungsform weist die Trägereinheit in ihrem ersten Tragbereich eine Anschlagfläche auf, wobei das Klemmmittel ausgelegt ist, die Felgeneinheit gegen die Anschlagfläche zu pressen und wobei die Anschlagfläche in Richtung des Krafteintrages des Klemmmittels eine Hinterschneidung aufweist, um die Felgeneinheit zu halten. Die Anschlagfläche kann bevorzugt konisch bzw. kegelförmig ausgebildet sein oder alternativ bevorzugt quer zur Rotationsachse ausgerichtet sein. Insbesondere dient die Anschlagfläche dazu, die Gegenkraft zum Klemmmittel auf die Felgeneinheit auszuüben und auf diese Weise die Felgeneinheit kraftschlüssig an der Trägereinheit festzulegen. Es kann auch bevorzugt sein, dass die Anschlagfläche an der Felgeneinheit vorgesehen ist, wobei das Klemmmittel bevorzugt formschlüssig mit der Felgeneinheit verbunden ist und die Trägereinheit zwischen Klemmmittel und der an der Felgeneinheit vorgesehenen Anschlagfläche einklemmt bzw. kraftschlüssig festlegt. Als Hinterschneidung in Richtung des Krafteintrages des Klemmmittels kann insbesondere auch eine Querschnittsverjüngung aufgefasst werden, welche verhindert, dass sich die Trägereinheit relativ zur Felgeneinheit in Richtung des Krafteintrages des Klemmmittels verlagert. Dabei ist es jedoch bevorzugt, dass die Anschlagfläche im Vergleich zur Rotationsachse steil genug angestellt ist, damit durch das Klemmmittel keine derartig straff sitzende Klemmverbindung, bzw. ein derartig straff sitzender Presssitz zwischen Felgeneinheit und Trägereinheit, hergestellt wird, dass dieser sich nicht durch manuelle Kräfte des Anwenders lösen lässt.

Besonders bevorzugt sind die Eingriffsmittel an der Anschlagfläche angeordnet, wobei das Klemmmittel den ersten Tragbereich längs der Rotationsachse gegen die Felgeneinheit presst, um die Eingriffsmittel in formschlüssiger Position zu sichern. Bevorzugt ist es also, dass die Eingriffsmittel an der Fläche bzw. den Flächen vorgesehen sind, in denen die Felgeneinheit und die Trägereinheit ohnehin durch das Klemmmittel aufeinandergepresst werden, wobei zwischen diesen Flächen vorteilhafterweise gleichzeitig die Eingriffsmittel in formschlüssigem Zustand bzw. in einer formschlüssigen Position gehalten werden können.

In einer alternativ bevorzugten Ausführungsform sind die Eingriffsmittel in einer um die Rotationsachse gekrümmten Ebene zwischen dem ersten Tragbereich und der Felgeneinheit angeordnet, wobei die Eingriffsmittel durch die Felgeneinheit und die Trägereinheit quer zur Rotationsachse zueinander in formschlüssiger Position gehalten werden. Um die Eingriffsmittel zwischen der Felgeneinheit und dem ersten Tragbereich anzuordnen, können die Eingriffsmittel auch in einer gekrümmten Ebene zwischen der Felgeneinheit und der Trägereinheit angeordnet sein. Besonders bevorzugt kann es hierbei sein, dass die Eingriffsmittel als länglich und parallel zur Rotationsachse ausgebildete Vor- und Rücksprünge jeweils in der Felgeneinheit und der Trägereinheit ausgebildet sind und dass die Felgeneinheit und die Trägereinheit jeweils entsprechend nur durch Verlagerung parallel zur Rotationsachse ineinander geschoben werden können, wobei die Eingriffsmittel automatisch in Kontakt zueinander treten und die Felgeneinheit formschlüssig gegen Verdrehung um die Rotationsachse relativ zur Trägereinheit gesichert ist. Bei dieser Ausführungsform gewährleisten die Klemmmittel lediglich eine Sicherung der axialen Position der Felgeneinheit relativ zur Trägereinheit, wobei sämtliche Verdrehbewegungen der Felgeneinheit relativ zur Trägereinheit durch die Eingriffsmittel verhindert werden können. Bevorzugt kann es bei dieser Ausführungsform auch sein, dass die Eingriffsmittel zwei an der Felgeneinheit und der Trägereinheit vorgesehene Rücksprünge sind, in die ein drittes Eingriffsmittel, beispielsweise ein loser Bolzen, eingeführt wird, wobei dieser beispielsweise durch darauf festgelegte Klemmmittel gegen Verlagerung in axialer Richtung gesichert werden kann.

Mit Vorteil weist die Trägereinheit eine Vielzahl punktsymmetrisch um die Rotationsachse verteilter erster Tragbereiche auf. Mit anderen Worten ist die Trägereinheit bevorzugt als Radstern bzw. Felgenstern oder Radkranz bzw. Felgenkranz ausgelegt, an welchem eine oder mehrere Felgeneinheitssegmente, die ringförmig um die Rotationsachse ausgerichtet sind, festlegbar sind. Die punktsymmetrische Ausrichtung der ersten Tragbereiche der Trägereinheit gewährleistet außerdem, dass die Felgeneinheit unter verschiedenen Winkelpositionen relativ zur Trägereinheit an dieser montiert werden kann. Je höher dabei die Anzahl der ersten Tragbereiche ist, desto gleichmäßiger kann die Last der von der Felgeneinheit auf die Trägereinheit übertragenen Kräfte auf mehrere erste Tragbereiche verteilt werden. Dem entgegen kann bei einer Anzahl von beispielsweise nur drei ersten Tragbereichen das Gewicht der Trägereinheit und damit das Gewicht des gesamten Radsystems deutlich reduziert werden. Besonders bei einer mehrteiligen Auslegung der Felgeneinheit ist es bevorzugt, dass zumindest so viele erste Tragbereiche an der Trägereinheit vorgesehen sind, wie Felgenelemente der Felgeneinheit vorgesehen sind. Bevorzugt wird dabei ein Felgenelement der Felgeneinheit von zumindest zwei ersten Tragbereichen der Trägereinheit gegen Verlagerung in radialer Richtung, also quer zur Rotationsachse, gesichert. Besonders bevorzugt ist es, dass an einer Trägereinheit zwei Felgeneinheiten festlegbar sind, wobei die Felgeneinheiten entlang der Rotationsachse zueinander versetzt und koaxial angeordnet sind.

In bevorzugter Weise weist die Trägereinheit einen zweiten Tragbereich auf, um die Trägereinheit an einer Radaufhängung eines Nutzfahrzeuges festzulegen. Der zweite Tragbereich der Trägereinheit dient insbesondere dazu, das Radsystem an einem Nutzfahrzeug festzulegen. Hierzu ist am Nutzfahrzeug in bekannter Weise bevorzugt ein Flansch vorgesehen, an welchem beispielsweise mittels mehrerer Schrauben eine Felge bzw. eine Radfelge bzw. im Fall der vorliegenden Erfindung die Trägereinheit montiert bzw. festgelegt werden kann. Der zweite Tragbereich der Trägereinheit weist hierfür bevorzugt eine Vielzahl von Bohrungen auf, durch welche Befestigungsmittel gesteckt werden können, welche wiederum im Gewinde an der Radaufhängung des Nutzfahrzeuges eingreifen, um auf diese Weise die Trägereinheit kraft- und formschlüssig an der Radaufhängung des Nutzfahrzeuges festzulegen.

In einer weiterhin bevorzugten Ausführungsform ist die Felgeneinheit aus zumindest drei Felgenelementen gebildet, von denen jedes durch zumindest einen ersten Tragbereich gegen Verlagerung zur Rotationsachse hin und durch einen Fahrzeugreifen gegen Verlagerung von der Rotationsachse weg gesichert ist. Die hier beschriebene Felgeneinheit ist bevorzugt dreiteilig ausgelegt, insbesondere, um die Montage und Demontage der Felgeneinheit bzw. des gesamten Radsystems zu erleichtern und von nur einem Arbeiter bzw. einem Anwender durchführbar. Dazu können die Felgenelemente nacheinander in die axiale Aussparung des Reifens bzw. Schlauches bzw. schlauchlosen Reifens eingesetzt werden und anschließend durch die Trägereinheit nach innen hin abgestützt und gegen den Reifen gehalten werden. Dabei ist es bevorzugt, dass jedes der Felgenelemente durch zumindest einen ersten Tragbereich, besonders bevorzugt jedoch zwei erste Tragbereiche nach innen hin gehalten wird, wobei durch späteres Einfüllen der Pressluft in den Fahrzeugreifen die Felgenelemente nach innen hin, also zur Rotationsachse hin, gegen die ersten Tragbereiche gepresst werden und somit ein stabiler Radverband bzw. ein stabiles Radsystem gebildet ist. Dieses Radsystem ist insbesondere auch unter dem Namen "TRILEX®" bekannt und wird bevorzugt für Fahrzeugräder mit Schlauch und Fahrzeugreifen verwendet.

Weitere Vorteile und Merkmale ergeben sich aus der nachfolgenden Beschreibung bevorzugter Ausführungsformen des erfindungsgemäßen Radsystems mit Bezug auf die beigefügten Figuren. Dabei können einzelne Merkmale verschiedener Ausführungsformen im Rahmen der Erfindung miteinander kombiniert werden. Es zeigen:
- Fig. 1: eine Ansicht einer bevorzugten Ausführungsform des erfindungsgemä-βen Radsystems,
- Fig. 2: eine weitere Ansicht einer bevorzugten Ausführungsform des erfindungsgemäßen Radsystems,
- Fig. 3: eine Schnittansicht einer bevorzugten Ausführungsform des erfindungsgemäßen Radsystems,
- Fig.4: eine Schnittansicht einer bevorzugten Ausführungsform des erfindungsgemäßen Radsystems, und
- Fig. 5: eine perspektivische Ansicht einer bevorzugten Ausführungsform des Klemmteils.

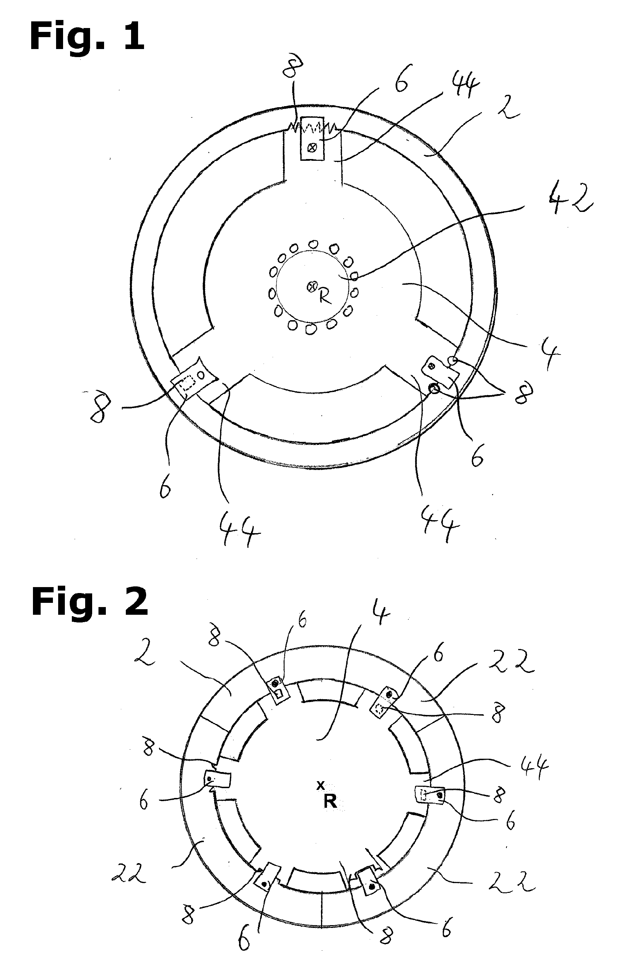

Fig. 1 zeigt eine Ansicht des erfindungsgemäßen Radsystems längs der Rotationsachse R. Das Radsystem umfasst hierbei eine Felgeneinheit 2, eine Trägereinheit 4, bevorzugt drei Klemmmittel 6 und eine Vielzahl von Eingriffsmitteln 8. Die Felgeneinheit 2 ist bevorzugt als ringförmiger Körper ausgebildet. Insbesondere bevorzugt ist die Felgeneinheit ein um die Rotationsachse R ausgetragenes Profil, wobei eine Profilform bevorzugt ist, bei welcher ein außen an der Felgeneinheit 2 angebrachter Reifen sowohl gegen Verlagerung quer als auch längs der Rotationsachse R gesichert ist. An der Innenseite der Felgeneinheit 2 ist die Trägereinheit 4 angeordnet, wobei die Trägereinheit 4 insbesondere bevorzugt drei erste Tragbereiche 44 aufweist. Die Trägereinheit 4 ist in einem zweiten Tragbereich 42 bevorzugt an der Radaufhängung eines Nutzfahrzeuges festgelegt und drehbar um die Rotationsachse R gelagert. Die ersten Tragbereiche 44 dienen insbesondere bevorzugt dazu, die Felgeneinheit 2 drehbar gelagert um die Rotationsachse R und rotationssymmetrisch zu dieser zu halten bzw. festzulegen. Um bei Auftreten eines bremsenden Momentes, welches von der Trägereinheit 4 an die Felgeneinheit 2 übertragen werden muss, zu verhindern, dass die Felgeneinheit 2 sich relativ zur Trägereinheit 4 verdreht, sind Klemmmittel 6 und erste und zweite Eingriffsmittel 8 vorgesehen, welche jeweils einen ersten Tragbereich 44 an der Felgeneinheit 2 kraft- und formschlüssig festlegen. Bevorzugt ist es, dass die Klemmmittel 6 formschlüssig, beispielsweise mittels einer Schraube oder eines Bolzens, an der Trägereinheit 4 bzw. dem ersten Tragbereich 44 festgelegt sind und eine kraftschlüssige Verbindung mit einem entsprechenden Bereich bzw. einer entsprechenden Fläche der Felgeneinheit 2 eingehen. Die Eingriffsmittel 8 sind insbesondere bevorzugt, Vorsprünge und/oder Rücksprünge und/oder lose bzw. separate Bauteile, die eine formschlüssige Verbindung mit einem jeweils gegenüber liegenden, teilweise oder bereichsweise korrespondierenden, Eingriffsmittel 8 eingehen. Zur Herstellung einer formschlüssigen Verbindung ist hierbei bevorzugt, ein Eingriffsmittel 8 an einer der beiden Einheiten - Trägereinheit 4 oder Felgeneinheit 2 - vorgesehen und ein gegenüberliegendes Eingriffsmittel 8 an zumindest einem der Klemmmittel 6 und/oder der jeweils gegenüber liegenden Einheit (Trägereinheit 4 oder Felgeneinheit 2) vorgesehen. Insbesondere bevorzugt kann es sein, dass die Eingriffsmittel 8 als Zähne ausgebildet sind, die mit jeweils gegenüber liegenden Zähnen an der jeweils gegenüber liegenden Einheit formschlüssig eingreifen.

Fig. 2 zeigt eine weitere Ansicht eine bevorzugten Ausführungsform längs der Rotationsachse R, wobei die Felgeneinheit 2 aus einer Vielzahl von Felgenelementen 22 zusammengesetzt ist. Wie in der Figur gezeigt, sind 3 Felgenelemente 22 insbesondere bevorzugt. Weiterhin sind als Abwandlung zum in Fig. 1 gezeigten Radsystem die Klemmmittel 6 an der Felgeneinheit 2 und nicht an den Tragbereichen der Trägereinheit formschlüssig festgelegt. Exemplarisch sind verschiedene bevorzugte Ausführungsformen der Eingriffsmittel 8 gezeigt, wobei die mit gestrichelten Linien dargestellten Eingriffsmittel 8 vom Betrachter aus unterhalb der Klemmmittel 6 angeordnet sind.

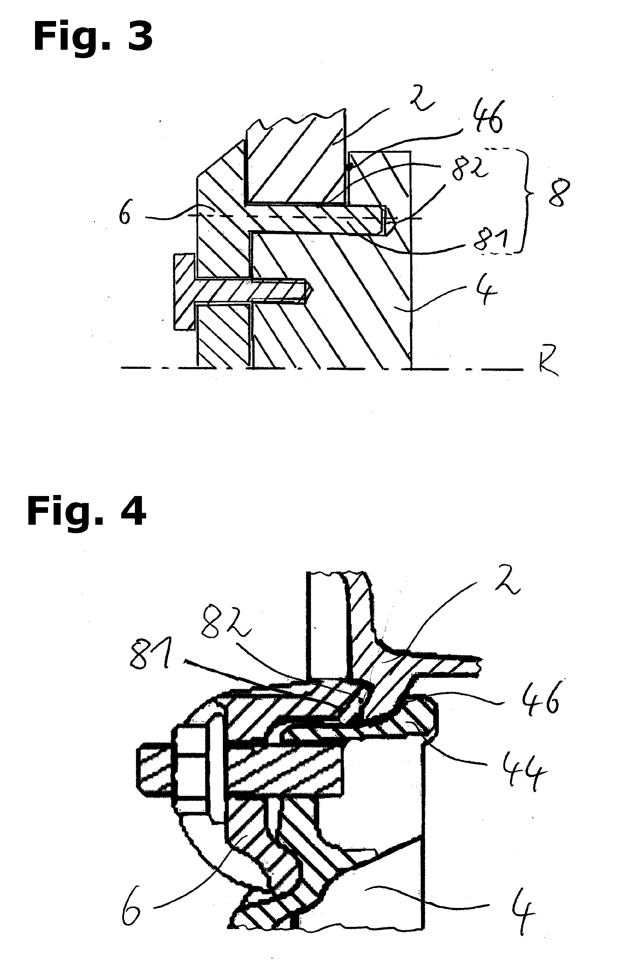

Fig. 3 zeigt eine Schnittansicht einer bevorzugten Ausführungsform des erfindungsgemäßen Radsystems, wobei insbesondere bevorzugt ein erstes Eingriffsmittel 81 an dem Klemmmittel 6 vorgesehen ist, das in jeweils korrespondierende zweite Eingriffsmittel 82 an der Trägereinheit 4 und der Felgeneinheit 2 eingreift. Weiterhin ist gezeigt, dass das Klemmmittel 6 bevorzugt mit einem Befestigungsmittel, welches beispielsweise als Schraube ausgelegt ist, formschlüssig an der Trägereinheit 4 festgelegt ist und mittels eines Vorsprunges, der in der Figur oben gezeigt ist, die Felgeneinheit 2 gegen die Anschlagfläche 46 der Trägereinheit 4 presst. Es ist bevorzugt, dass das Befestigungsmittel, welches das Klemmmittel 6 fixiert bzw. formschlüssig an einer der Einheiten festlegt, nicht auch gleichzeitig den Formschluss zwischen Trägereinheit 4 und Felgeneinheit 2 gewährleistet, da bei den zu erwartenden zyklischen Belastungen das Gewinde dieses Befestigungsmittels beschädigt werden kann und so eine Demontage des Radsystems erschwert wird bzw. unmöglich wird. Stattdessen ist bevorzugt, ein erstes Eingriffsmittel 81 einzusetzen, welches als Vorsprung am Klemmmittel 6 ausgebildet ist oder alternativ bevorzugt als separates Bauteil, wie beispielsweise eine Passfeder, ausgelegt ist. Dieses erste Eingriffsmittel 81 kann bei Beschädigung mit geringem Aufwand ersetzt werden und es können auf diese Weise Kosten gespart werden. Das erste Eingriffsmittel 81 greift bevorzugt in zwei zweite Eingriffsmittel 82 ein, die als Rücksprünge bzw. Aussparungen in der Felgeneinheit 2 und der Trägereinheit 4 ausgelegt sind. Da das erste Eingriffsmittel 81 zumeist auf Scherbeanspruchung belastet wird, also Schubspannung in einer Ebene, die senkrecht zur gezeigten Betrachtungsebene steht, ist es bevorzugt, dass das erste Befestigungsmittel 81 eine Ausdehnung in dieser Ebene besitzt, die in Richtung des Krafteintrages möglichst groß ist. Es kann auf diese Weise das Risiko vermindert werden, dass das Eingriffsmittel durch eine hohe Bremsbelastung bzw. ein hohes Bremsmoment in Tangentialrichtung, also in Umfangsrichtung um die Rotationsachse R, abgeschert wird. Weiterhin ist es bevorzugt, dass als erstes Befestigungsmittel einfach und günstig zu ersetzende Normteile wie Norm-Passfedern oder Norm-Bolzen verwendet werden, um die Kosten zur Montage bzw. Herstellung des Radsystems zu minimieren. Bevorzugt ist, wie durch die gestrichelte Linie auf Höhe des ersten Eingriffsmittels 81 dargestellt, das erste Eingriffsmittel 81 als rotationssymmetrisches, beispielsweise zylinderförmiges, Element ausgelegt. Die zweiten Eingriffsmittel 82 weisen eine zumindest bereichsweise mit dem ersten Eingriffsmittel 81 korrespondierende Geometrie auf.

Fig. 4 zeigt eine Schnittansicht einer bevorzugten Ausführungsform des erfindungsgemäßen Radsystemes, wobei das erste Eingriffsmittel 81 als Vorsprung am Klemmmittel 6 ausgelegt ist, welches seinerseits an der Trägereinheit 4 festgelegt ist und mit seinem Vorsprung bzw. ersten Eingriffsmittel 81 in einen Rücksprung bzw. zweites Eingriffsmittel 82 an der Felgeneinheit 2 formschlüssig eingreift. Diese Ausführungsform ist besonders daher bevorzugt, dass geringe Änderungen an bereits bestehenden Radsystemen vorgenommen werden müssen. Es müssen bevorzugt lediglich kleine Rücksprünge in bestehenden Felgeneinheiten eingefügt werden und neuartigen Klemmmitteln 6, die die Vorsprünge aufweisen, die in diese Rücksprünge an den Felgeneinheiten 2 eingreifen können. Alternativ bevorzugt kann es auch sein, dass an der Kontaktfläche 46 zwischen Felgeneinheit 2 und Trägereinheit 4 ebenfalls Vor- und Rücksprünge vorgesehen sind, um insbesondere nicht das gesamte Bremsmoment der Felgeneinheit 2 auf die Trägereinheit 4 über das Klemmmittel 6 zu übertragen, sondern gleichmäßig auf einen weiteren Formschluss zwischen Trägereinheit 4 und Felgeneinheit 2 zu verteilen.

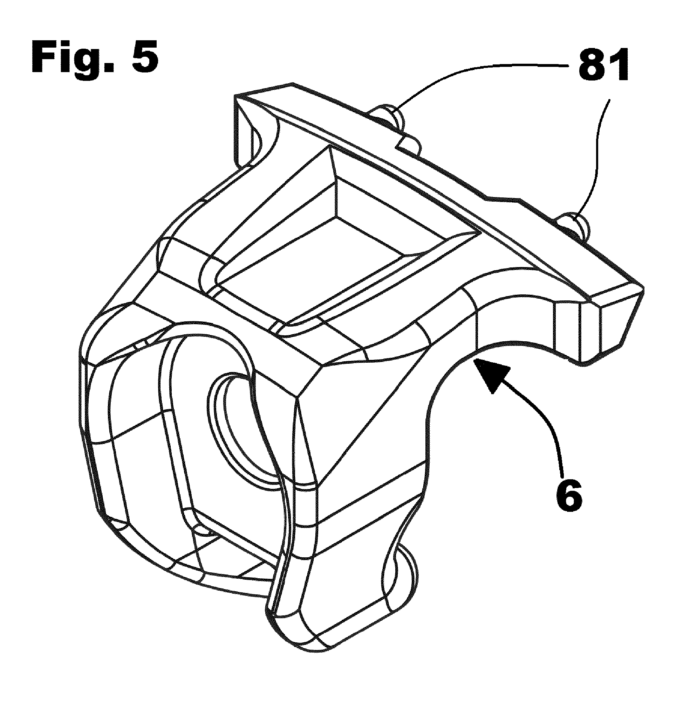

Fig. 5 zeigt das Klemmteil 6 mit bevorzugt zwei daran integral angeordneten, bzw. einstückig mit dem Klemmteil 6 ausgeführten ersten Eingriffsmitteln 81. Die als Vorsprung, besonders bevorzugt als gerundete Noppe, bzw. Nase ausgebildeten ersten Eingriffsmittel 81 sind dafür ausgelegt mit zweiten Eingriffsmitteln 82 (nicht gezeigt) an der Felgeneinheit 2 (nicht gezeigt) in formschlüssigen Eingriff zu gelangen und auf diese Weise das Klemmteil 6 gegen Verdrehung relativ zur Felgeneinheit 2 (nicht gezeigt) zu sichern.

### Bezugszeichenliste:

- 2 -: Felgeneinheit
- 4 -: Trägereinheit
- 6 -: Klemmmittel
- 8 -: Eingrififsmittel
- 22 -: Felgenelement
- 42 -: zweiter Tragbereich
- 44 -: erster Tragbereich
- 46 -: Anschlagfläche
- 81 -: erstes Eingrififsmittel
- 82 -: zweites Eingrififsmittel
- R -: Rotationsachse

## Patentansprüche

1. Radsystem für Nutzfahrzeuge, umfassend eine Felgeneinheit (2) und eine Trägereinheit (4),
wobei die Felgeneinheit (2) ringförmig ausgebildet ist,
wobei die Trägereinheit (4) zumindest einen ersten Tragbereich (44) aufweist, über welchen diese an der Felgeneinheit (2) festlegbar ist,
wobei ein Klemmmittel (6) vorgesehen ist, das formschlüssig an einer ersten der Einheiten (2, 4) festgelegt ist und ausgelegt ist kraftschlüssig an der zweiten bzw. anderen Einheit (4, 2) festgelegt zu werden,
wobei ein Eingriffsmittel (8) vorgesehen ist, das ausgelegt ist, einen in einer Umfangsrichtung wirkenden Formschluss zwischen der zweiten Einheit (4, 2) und dem Klemmmittel (6) und/oder der ersten Einheit (2, 4) herzustellen, um die Felgeneinheit (2) gegen Verdrehung um eine Rotationsachse (R) relativ zur Trägereinheit (4) zu sichern.

2. Radsystem nach Anspruch 1,
wobei ein zweites Eingriffsmittel (82) als Rücksprung oder Aussparung ausgebildet und an der zweiten Einheit (4, 2) vorgesehen ist, um mit einem ersten Eingriffsmittel (81) zumindest bereichsweise in formschlüssigen Eingriff gebracht zu werden.

3. Radsystem nach Anspruch 2,
wobei das erste Eingriffsmittel (81) ein an der ersten Einheit (2, 4) oder dem Klemmmittel (6) vorgesehener Vorsprung ist, der mit dem zumindest bereichsweise korrespondierenden zweiten Eingriffsmittel (82) an der zweiten Einheit (4, 2) in formschlüssigen Eingriff bringbar ist.

4. Radsystem nach einem der Ansprüche 1 oder 2,
wobei das erste Eingriffsmittel (81) ein an einer der Einheiten (2, 4) oder dem Klemmmittel (6) stoffschlüssig festgelegtes Bauteil ist.

5. Radsystem nach Anspruch 2 bis 4,
wobei das Klemmmittel (6) zwei als Vorsprung ausgebildete erste Eingriffsmittel (81) aufweist, welche mit als Rücksprung ausgebildeten zweiten Eingriffsmitteln (82) an der Felgeneinheit (2) in formschlüssigen Eingriff bringbar sind.

6. Radsystem nach Anspruch 2 oder 3,
wobei das erste Eingriffsmittel (81) als separates Bauteil ausgelegt ist und mit zweiten Eingriffsmitteln (82) der zweiten Einheit (4, 2) und der ersten Einheit (2, 4) oder mit zweiten Eingriffsmitteln (82) der zweiten Einheit (4, 2) und dem Klemmmittel (6) oder mit zweiten Eingriffsmitteln (82) der zweiten Einheit (4, 2) sowie der ersten Einheit (2, 4) und dem Klemmmittel (6) in formschlüssigen Eingriff zu gelangen.

7. Radsystem nach einem der vorhergehenden Ansprüche,
wobei die Trägereinheit (4) in ihrem ersten Tragbereich (44) eine Anschlagfläche (46) aufweist,
wobei das Klemmmittel (6) ausgelegt ist, die Felgeneinheit (2) gegen die Anschlagfläche (46) zu pressen, und
wobei die Anschlagfläche in Richtung des Krafteintrages des Klemmmittels (6) eine Hinterschneidung aufweist, um die Felgeneinheit (2) zu halten.

8. Radsystem nach Anspruch 7,
wobei das Eingriffsmittel (8) an der Anschlagfläche (46) angeordnet ist, und wobei das Klemmmittel (6) den ersten Tragbereich (44) längs der Rotationsachse (R) gegen die Felgeneinheit (2) presst, um das Eingriffsmittel (8) in formschlüssiger Position zu sichern.

9. Radsystem nach einem der vorhergehenden Ansprüche,
wobei eine Vielzahl von Eingriffsmitteln (8) in einer um die Rotationsachse (R) gekrümmten Ebene zwischen dem ersten Tragbereich (44) und der Felgeneinheit (2) angeordnet sind, und
wobei die Eingriffsmittel (8) durch die Felgeneinheit (2) und die Trägereinheit (4) quer zur Rotationsachse (R) zueinander in formschlüssiger Position gehalten werden.

10. Radsystem nach einem der vorhergehenden Ansprüche,
wobei die Trägereinheit (4) eine Vielzahl punktsymmetrisch um die Rotationsachse (R) verteilter erster Tragbereiche (44) aufweist.

11. Radsystem nach einem der vorhergehenden Ansprüche,
wobei die Trägereinheit (4) einen zweiten Tragbereich (42) aufweist, um die Trägereinheit (4) an einer Radaufhängung eines Nutzfahrzeuges festzulegen.
